# FASCICULE DE BREVET EUROPEEN

(11) **EP 0 928 923 B1**
(45) Date de publication et mention de la délivrance du brevet: **17.03.2004**
(21) Numéro de dépôt: 99400029.7
(22) Date de dépôt: 07.01.1999
(51) Int. Cl.: F16P 3/14

(54) **Barrière optique de sécurité à fixation repositionnable, notamment pour protéger l'accès à des installations**
Sicherheitslichtschranke mit wiedereinstellbarer Fixierung, insbesondere zum Schutz des Zugangs zu Anlagen
Optical security barrier with repositionable fastening, in particular for protection of access to installations

(30) Priorité: 08.01.1998 FR 9800131
(43) Date de publication de la demande: 14.07.1999
(73) Titulaire: Schneider Electric Industries SAS, 92500 Rueil-Malmaison (FR)
(72) Inventeur: Givet, Jean-Bernard, 38700 Corenc (FR)
(74) Mandataire: Carias, Alain

(56) Documents cités:
- GB-A- 2 022 820
- US-A- 5 302 942

## Description

La présente invention concerne une barrière optique de sécurité, notamment destinée à protéger l'accès d'installations industrielles, comme connue par US-A-5 302 942, comprenant :
- un boîtier logeant les moyens électroniques et optiques, émetteurs ou récepteurs,
- ce boîtier étant monté de manière réglable optiquement par ses deux côtés, autour d'un axe, dans deux supports reliés à une partie fixe telle que, par exemple, mur, bâti, ossature,
- les deux côtés du boîtier correspondant aux deux supports étant reliés chacun par une liaison pivotante, par exemple pivot ou palier, aux supports pour permettre le réglage optique de la barrière,
- des moyens de blocage de la liaison pivotante.

Il existe de nombreux domaines dans lesquels il faut protéger ou interdire l'accès d'une zone par une barrière immatérielle, par exemple à rayons infrarouges, pour interdire l'accès d'une machine dangereuse. De telles barrières peuvent également s'utiliser pour protéger des zones sensibles, interdire l'accès ou détecter une intrusion.

Les barrières immatérielles de sécurité utilisées pour protéger les personnes travaillant sur les machines dangereuses sont des appareils de plus en plus fiables. Néanmoins, en cas de défaillance, il faut remplacer ces barrières très rapidement pour éviter d'immobiliser la machine. Cela est d'autant plus important que, souvent, les machines protégées sont intégrées dans une chaîne de fabrication et que tout arrêt d'une machine est préjudiciable à la production.

Le remplacement d'une barrière défectueuse suppose, outre les opérations de déconnexion électrique, de dépose mécanique de la barrière défectueuse puis de pose mécanique et de connexion électrique de la barrière de remplacement, également un réglage optique du nouveau boîtier mis en place. Or, ce réglage optique est une opération coûteuse en temps et il doit être effectué par un personnel équipé et spécialisé.

La présente invention a pour but de remédier à ces inconvénients et se propose de réaliser une barrière de sécurité dont le remplacement est une opération très simple, rapide, et qui peut être effectuée sans risque par du personnel non qualifié.

A cet effet, l'invention concerne une barrière optique de sécurité du type défini ci-dessus, caractérisée en ce que :
- au moins un support comporte un moyen d'indexage mécanique réglable en fonction du réglage optique du boîtier,
- le côté du boîtier est muni d'un logement fixe pour recevoir le moyen d'indexage porté par le support et bloqué dans la position réglée.

En cas de défaillance d'une barrière ou d'une partie de barrière, c'est-à-dire d'un boîtier, il suffit de débloquer le boîtier par rapport à ses organes de support, en général un organe haut et un organe bas, d'écarter éventuellement l'un des organes de support et d'extraire le boîtier défectueux puis de mettre en place un nouveau boîtier. Cette mise en place se fait de manière simple. Il suffit de positionner les deux liaisons pivot/palier et de pivoter le boîtier par rapport à l'un des supports pour que l'organe d'indexage du support corresponde automatiquement au logement d'indexage du boîtier. Cette mise en place étant réalisée, il suffit pour bloquer le boîtier de visser les vis de blocage du ou des supports.

La connexion électrique peut alors se mettre en place et la barrière est prête à fonctionner.

Suivant une autre caractéristique avantageuse, le ou les supports du boîtier sont constitués par deux équerres.

Suivant une autre caractéristique avantageuse, le moyen d'indexage est un trou oblong curviligne, centré sur l'axe de pivotement du boîtier par rapport au support et recevant une liaison vis/écrou bloquée, une fois le réglage optique effectué.

Le trou oblong curviligne pour le moyen d'indexage et le trou oblong curviligne pour le moyen de blocage constituent une solution très intéressante car polyvalente, adaptée à toutes les orientations du boîtier par rapport au support.

En effet, suivant les machines ou les surfaces de support, l'orientation entre la surface et le boîtier, c'est-à-dire l'orientation que doit présenter la barrière, ne sont jamais définies de manière précise préalablement au premier montage ou uniforme dans toutes les installations. Seule est définie la surface, en général le plan ou plus généralement la surface d'émission/réception constituant la barrière immatérielle. Or, ce plan peut avoir une orientation quelconque par rapport au support et, en général, cette orientation n'est pas connue et n'a pas à être connue puisque le moyen d'indexage permet de repositionner automatiquement un nouveau boîtier sans avoir à se préoccuper de réglages optiques.

De façon particulièrement avantageuse et simple, le moyen de blocage comprend :
- un trou oblong curviligne, réalisé dans le support, centré sur l'axe de pivotement,
- un taraudage dans le côté correspondant du boîtier et une vis traversant le trou oblong et se logeant dans le taraudage.

Suivant une autre caractéristique très avantageuse, le moyen d'indexage mécanique et le moyen de blocage de la liaison pivotante entre le boîtier et ses supports ne sont accessibles qu'à des outils de natures différentes.

Il est très important que l'intervenant qui remplace le boîtier défectueux et qui est par définition du personnel non qualifié, ne puisse modifier accidentellement le réglage du moyen d'indexage. Pour cela, il est particulièrement intéressant que l'outil pour démonter le boîtier défectueux et monter le boîtier de remplacement, ne puisse pas intervenir sur les moyens d'indexage mécaniques.

Pour réaliser en pratique une telle caractéristique, il est intéressant que le moyen d'indexage soit une tête de vis à fente et que le moyen de blocage soit une tête hexagonale. Dans ces conditions, on ne risquera jamais de dévisser la tête de vis à fente avec une clé hexagonale.

Si par accident, un moyen d'indexage était libéré, en cas de deux moyens d'indexage c'est-à-dire de deux supports équipés chacun d'un moyen d'indexage, il serait possible de positionner le nouveau boîtier et de bloquer le moyen d'indexage déréglé après la mise en place du boîtier de remplacement.

Toutefois, si un seul moyen d'indexage est prévu, il est indispensable d'éviter toute modification du moyen d'indexage.

Suivant une autre caractéristique avantageuse de l'invention, le moyen d'indexage comprend une tête de vis à fente et le moyen de blocage une tête de vis hexagonale.

Cette solution est particulièrement intéressante car le boîtier est en général constitué par un tube profilé, coupé à la longueur et muni à ses deux extrémités d'un couvercle. Le couvercle qui est une pièce injectée par exemple en polymère, peut avoir une forme relativement compliquée.

Enfin, suivant une autre caractéristique avantageuse de l'invention, les moyens d'indexage et de blocage au niveau de chaque côté du boîtier sont dédoublés, ce qui constitue une sécurité supplémentaire.

La présente invention sera décrite ci-après de manière plus détaillée à l'aide des dessins annexés dans lesquels :
- la figure 1 est une vue arrière en perspective de la barrière de sécurité,
- la figure 2 est une vue en perspective montrant de face la barrière optique de sécurité, placée en position verticale,
- la combinaison des figures 1 et 2 correspond en fait à la mise en situation des deux barrières, l'une émettrice, l'autre réceptrice, définissant entre elles le plan immatériel,
- la figure 3 est une vue en perspective d'une extrémité du boîtier d'une barrière optique et de son support,
- la figure 4 montre, en perspective, l'extrémité du boîtier sans le support,
- la figure 5 est une vue de dessus de la figure 3,
- la figure 6 est une vue de côté de la figure 3.

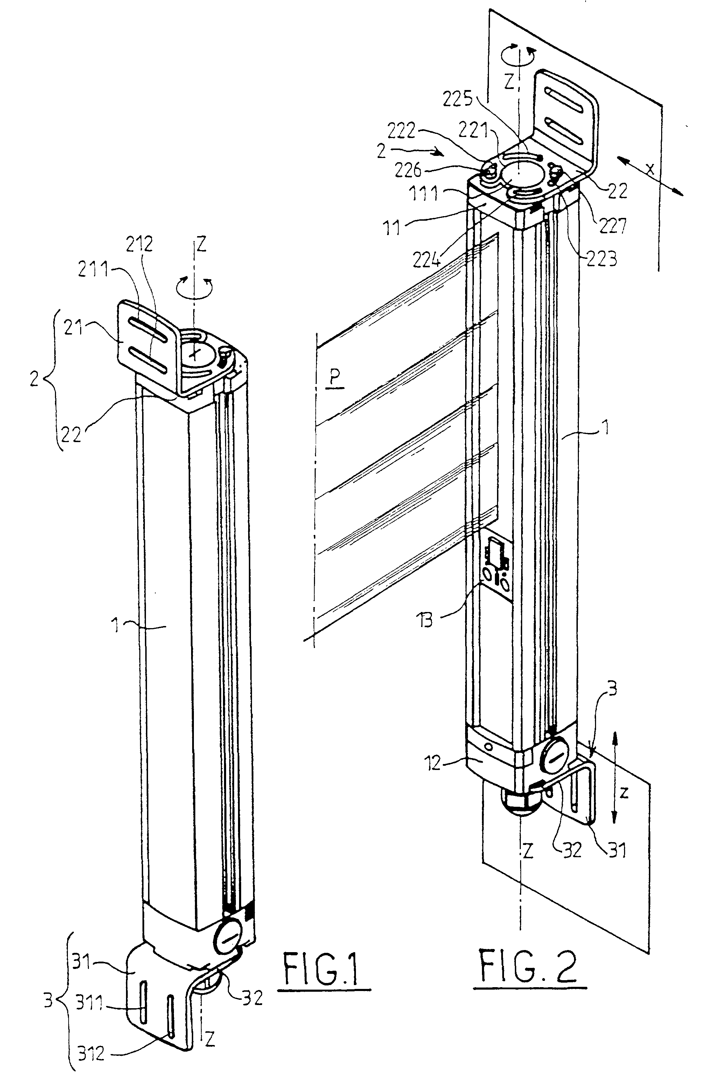

Selon les figures 1 et 2, l'invention concerne une barrière optique de sécurité encore appelée barrière immatérielle de sécurité. Cette barrière comporte des émetteurs/récepteurs non détaillés, définissant un plan de sécurité (P) qui ne doit pas être franchi, soit pour des raisons de protection du personnel, soit pour des raisons de protection de biens ou pour détecter ou interdire des intrusions. Le fait de pénétrer dans le voile P immatériel coupe un faisceau et déclenche une action.

Chaque barrière se compose d'un boîtier 1 contenant les moyens électroniques et optiques pour former le voile de protection P. Ce boîtier est monté de manière réglable c'est-à-dire orientable en rotation autour de l'axe ZZ dans un support supérieur 2 et un support inférieur 3. Ces deux supports sont identiques ou analogues. Les supports 2, 3 sont reliés à une partie fixe telle qu'un mur, une ossature, un bâti, etc. par l'intermédiaire de leur branche de fixation 21, 31, l'autre branche 22, 32 servant au montage réglable du boîtier 1.

Bien que l'orientation du boîtier 1 et du voile P qu'il forme soit représentée comme étant perpendiculaire aux surfaces définies par les branches 21, 31 des deux supports 2, 3 en forme d'équerre, cette orientation n'est pas la seule possible.

L'orientation du voile P peut être quelconque par rapport à l'orientation de la surface à laquelle se fixent les supports 2, 3.

Toutefois, cette orientation une fois définie est fixe et ne sera pas modifiée en cours d'utilisation de la barrière, aussi faut-il lorsque l'on remplace un boîtier 1 défectueux, retrouver cette orientation. Cette orientation peut se faire par tâtonnement puis par des réglages en utilisant un appareillage optique, à chaque remplacement de boîtier 1. Selon l'invention, l'orientation fixe est reproductible automatiquement au montage du nouveau boîtier 1.

De manière plus détaillée, chacun des supports 2, 3 comporte une branche 21, 31 pour sa fixation sur la partie fixe. La branche 21 est munie de deux fentes longitudinales 211, 212, horizontalement et la branche 31 comporte deux fentes verticales 311, 312 selon le sens du dessin.

L'orientation des fentes 211, 212 / 311, 312 permet de régler l'orientation du plan ou voile P en fonction des besoins.

Lorsque cette orientation est fixée, les branches 21, 31 sont reliées solidairement à la partie fixe.

Le blocage des supports 2, 3 sur la partie fixe ne se fait en général qu'après mise en place du boîtier 1. Il en est ainsi surtout du support 3.

Le support 2 comporte une branche de fixation 22 munie d'un palier 221 en forme de trou circulaire recevant un tourillon 111 porté par le côté 11 du boîtier 1. La branche 22 comporte également deux trous oblongs curvilignes 222, 223 centrés sur l'axe ZZ diamétralement opposés ainsi que deux trous oblongs 224, 225 curvilignes également centrés sur l'axe ZZ.

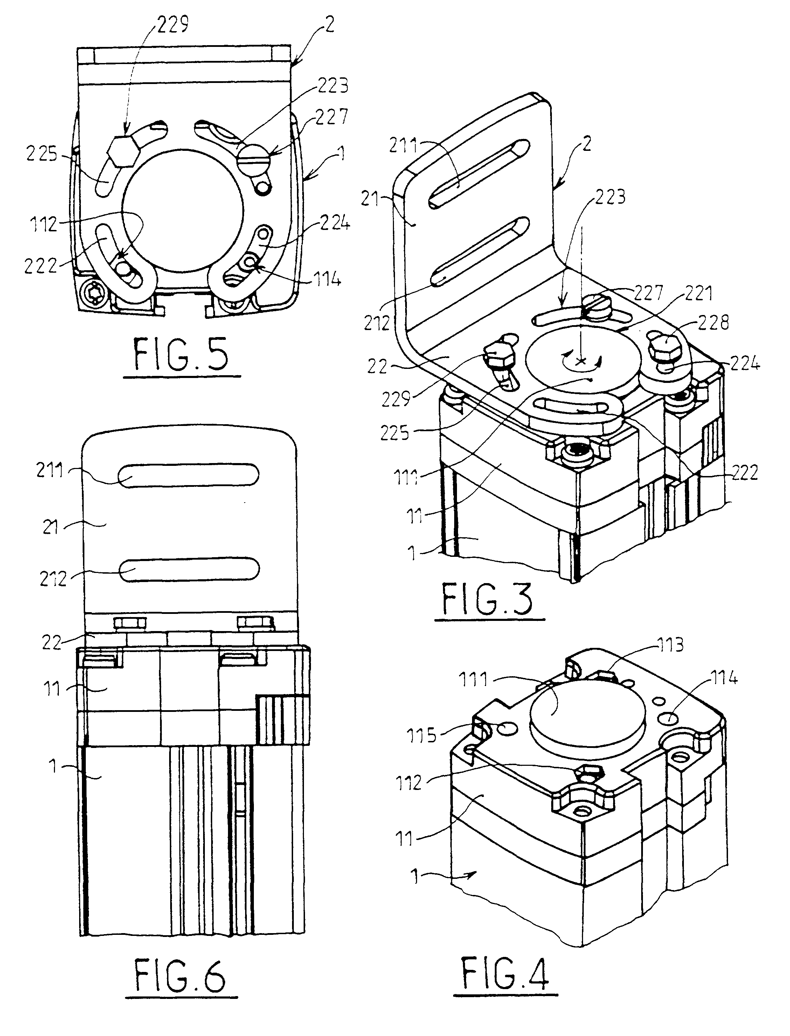

Les trous oblongs 222, 223 reçoivent des organes d'indexage 226, 227 et les trous oblongs 224, 225 reçoivent des organes de blocage 228, 229 (voir figure 3).

Comme déjà indiqué, pour son réglage, le boîtier 1 peut être pivoté autour de son axe ZZ. Lorsque le plan P de détection du boîtier se trouve dans l'orientation appropriée, on bloque les organes d'indexage 226, 227 dans leur trou oblong 222, 223 pour définir la position de réglage du boîtier. Ces organes d'indexage 226, 227 sont ainsi bloqués par rapport au support 2.

On peut solidariser alors le boîtier 1 dans sa position angulaire autour de l'axe ZZ par rapport au support 2 à l'aide des organes de blocage 228, 229.

Les mêmes possibilités existent pour le support inférieur 3 ; le côté inférieur du boîtier 1 constitué par un couvercle 12 comporte également un tourillon non représenté, logé en rotation autour de l'axe ZZ dans l'orifice de la branche de réception 322 du support 3. Cette branche 322 peut également comporter un moven d'indexation réglable, n'apparaissant pas aux figures et un ou plusieurs organes de blocage qui bloquent la position.

La seule différence entre le côté supérieur 11 et le côté inférieur 12 de la barrière optique est que l'organe de support 3 peut coulisser verticalement dans la direction de la double flèche Z pour la mise en place du boîtier 1 ou son enlèvement. Il suffit en effet de desserrer légèrement les vis placées dans les fentes 311, 312 de la branche 31 pour descendre l'équerre 3, dégager le tourillon du couvercle inférieur 12 du boîtier 1 et extraire alors le tourillon supérieur 111 de l'orifice 221 de la branche 22 puis extraire l'ensemble du boîtier 1 et le remplacer. A ce moment, après la mise en place du tourillon supérieur du nouveau boîtier dans l'orifice 221, on place le tourillon inférieur dans son orifice du support inférieur 3 et on relève le support inférieur 3 dans le sens de la double flèche z jusqu'à ce que l'ensemble soit bien maintenu dans ses deux supports 2, 3 tout en restant libre en rotation autour de l'axe ZZ.

L'opération de mise en place du boîtier 1 est alors terminée sans nécessiter aucun réglage d'orientation du boîtier.

La figure 2 montre le module de visualisation et de dialogue 13 à l'avant du boîtier 1.

La figure 3 montre de manière plus détaillée et dans le cas du support supérieur 2, les différents moyens décrits ci-dessus, notamment la branche 21 et les coulisses 211, 212 et surtout la branche ou partie 22 de l'organe de support en forme d'équerre 2 ainsi que l'orifice 221 formant le palier pour recevoir le tourillon 111 solidaire du couvercle supérieur 11 du boîtier 1.

Cette figure montre clairement les deux trous oblongs curvilignes 222, 224 recevant les moyens d'indexage dont seul le moyen 227 est représenté.

Les deux coulisses curvilignes 224, 225 sont également représentées avec leur organe de blocage respectif 228, 229.

Selon cet exemple de réalisation, les organes d'indexage 222, 227 sont constitués, par une vis avec un écrou. L'écrou vient se placer dans un logement 112, 113 du couvercle 11. Ces logements ont une forme hexagonale, adaptée à la dimension et à la forme de l'écrou de l'organe d'indexage.

En fait, au moment du montage, l'écrou est simplement placé dans le logement 112, 113 et la vis 228, 229 est librement engagée à travers le trou oblong 224, 225 jusque dans l'écrou.

Au moment de la première installation de la barrière optique, il suffit de desserrer la vis 226, 227 de chaque organe d'indexage et de tourner le boîtier 1 jusqu'à ce qu'il se trouve dans son orientation correcte autour de l'axe ZZ. Lorsque cette position est trouvée, on serre le boulon 226, 227 avec l'écrou placé dans son logement 112, 113 du couvercle 11. Le serrage se fait par la tête de vis 227 par exemple à fente. Il faut donc un tournevis pour serrer l'écrou et la vis contre la branche 22 du support 2.

La même opération s'effectue pour chacun des deux organes d'indexage.

Une fois les organes d'indexage fixés solidairement au support 2, on peut solidariser l'ensemble en serrant les organes de blocage (vis 228, 229 (figure 3)) dans les taraudages 114, 115 du couvercle 11. Le boîtier 1 est alors solidaire du support 2.

Les mêmes opérations se font au niveau de l'extrémité inférieure du boîtier 1 sachant toutefois que le serrage du boîtier 1 ne pourra se faire que lorsque les deux opérations de réglage des organes d'indexage dans leur trou oblong respectif auront été faites pour le côté supérieur et le côté inférieur du boîtier 1. Ce n'est qu'après le blocage des organes d'indexage que l'on peut solidariser le boîtier en serrant les organes de blocage.

Le démontage pour le remplacement du boîtier 1 est très simple. Il suffit de desserrer et d'enlever les organes de blocage 228, 229 sans toucher aux organes d'indexage 226, 227. Pour cela, il est particulièrement intéressant et prudent que les têtes des organes d'indexage et les têtes des organes de blocage soient différentes et, surtout, qu'elles nécessitent pour leur serrage un outil très différent comme, par exemple, une clé six pans pour les organes de blocage 228, 229 et un tournevis pour les organes d'indexage 226, 227.

Comme les organes d'indexage sont solidaires du support et ne bougent pas et que par ailleurs les logements 112, 113 du couvercle 11 du boîtier 1 sont dans une position unique quel que soit le boîtier, il est très facile de repositionner le nouveau boîtier en le plaçant par rapport aux organes d'indexage 228, 229 puis en serrant l'ensemble à l'aide des organes de serrage.

Les figures 5 et 6 montrent, en vue de dessus et en vue de côté, les différents moyens décrits ci-dessus.

Il convient de remarquer que l'organe de support et le côté inférieur du boîtier ont de préférence les mêmes principes d'orientation, d'indexage et de montage que les moyens prévus du côté supérieur.

La redondance des moyens d'indexage du côté supérieur et du côté inférieur du boîtier n'est pas inutile mais, au contraire, offre une sécurité supplémentaire au cas où, par accident, l'organe d'indexage d'un côté ou les deux organes d'indexage d'un même côté, étaient ouverts ou s'étaient desserrés. On retrouve alors la position d'orientation du boîtier grâce aux organes d'indexage à l'autre extrémité du support.

La description a été faite ci-dessus avec des boîtiers 1 en position verticale. Il s'agit uniquement d'un exemple car le boîtier 1 peut avoir n'importe quelle orientation en fonction de la situation du plan P et des possibilités d'installation des boîtiers.

## Revendications

1. Barrière optique de sécurité, notamment destinée à protéger l'accès d'installations industrielles, comprenant
- un boîtier (1) logeant les moyens électroniques et optiques, émetteurs ou récepteurs,
- ce boîtier étant monté de manière réglable optiquement par ses deux côtés, autour d'un axe (ZZ), dans deux supports (2, 3) reliés à une partie fixe telle que, par exemple, mur, bâti, ossature,
- les deux côtés du boîtier (1) correspondant aux deux supports étant reliés chacun par une liaison pivotante, par exemple pivot ou palier, aux supports (2, 3) pour permettre le réglage optique de la barrière,
- des moyens de blocage de la liaison pivotante,
**caractérisée en ce que**
- au moins un support (2, 3) comporte un moyen d'indexage mécanique (222, 223, 226, 227) réglable en fonction du réglage optique du boîtier (1),
- le côté (11, 12) du boîtier (1) est muni d'un logement fixe (112, 113) pour recevoir le moyen d'indexage (226, 227) porté par le support (2, 3) et bloqué dans la position réglée.

2. Barrière optique de sécurité selon la revendication 1,
**caractérisée en ce que**
le support (2, 3) est une équerre.

3. Barrière optique de sécurité selon la revendication 1,
**caractérisée en ce que**
le moyen d'indexage est un trou oblong (222, 223) curviligne, centré sur l'axe de pivotement (ZZ) du boîtier (1) par rapport au support (2, 3) et recevant une liaison vis/écrou (226, 227) bloquée, une fois le réglage optique effectué.

4. Barrière optique de sécurité selon la revendication 1,
**caractérisée en ce que** le moyen de blocage comprend :
- un trou oblong (224, 225) curviligne, réalisé dans le support (2, 3), centré sur l'axe de pivotement (ZZ),
- un taraudage (114, 115) dans les côté (11, 12) correspondant du boîtier (1) et une vis (228, 225) traversant le trou oblong (224, 225) et se logeant dans le taraudage (114, 115).

5. Barrière optique de sécurité selon la revendication 1,
**caractérisée en ce que**
le moyen d'indexage mécanique (226, 227) et le moyen de blocage (228, 229) de la liaison pivotante entre le boîtier (1) et ses supports (2, 3) ne sont accessibles qu'à des outils de natures différentes.

6. Barrière optique de sécurité selon les revendications 3, 4, 5,
**caractérisée en ce que**
le moyen d'indexage comprend une tête de vis à fente (227) et le moyen de blocage (228, 229) une tête de vis hexagonale.

7. Barrière optique selon la revendication 1,
**caractérisée en ce que**
le côté (11, 12) du boîtier (1) est un couvercle et le pivot est un tourillon (111) réalisé sur le couvercle (11, 12), le support (2, 3) recevant ce côté (11, 12) du boîtier (1) ayant un orifice (221) formant un palier pour le tourillon (111), l'orifice étant entouré par les trous oblongs (222, 223, 224, 225) curvilignes centrés sur l'axe de pivotement (ZZ).

8. Barrière optique de sécurité selon revendication 1,
**caractérisée en ce que**
- les moyens d'indexage sont constitués par deux trous oblongs (222, 223) curvilignes centrés sur l'axe de pivotement (ZZ) et diamétralement opposés, et deux logements (112, 113) fixes, réalisés dans le côté (11, 12), dans des positions diamétralement opposées par rapport à l'axe de pivotement (ZZ),
- les moyens de blocage étant également diamétralement opposés dans le support (2, 3) et dans le côté (11, 12), en s'intercalant entre les moyens d'indexage mécaniques.

## Patentansprüche

1. Sicherheits-Lichtschranke, insbesondere für den Zugangsschutz in Industrieanlagen, mit
- einem Gehäuse (1) mit darin angeordneten elektronischen und optischen Sende- bzw. Empfangsmitteln,
- welches Gehäuse so montiert ist, daß es auf beiden Seiten in zwei Stützelementen (2, 3), die mit einem feststehenden Teil (Mauer, Chassis, Rahmengestell) verbunden sind, um eine Achse (ZZ) herum optisch verstellt werden kann,
- und die beiden, den zwei Stützelementen zugeordneten Seiten des Gehäuses (1) jeweils über eine Drehverbindung (Drehachse/Lager) mit den Stützelementen (2, 3) verbunden sind, um die optische Einstellung der Lichtschranke zu ermöglichen,
- Feststellmitteln zum Blockieren der Drehverbindung,
**dadurch gekennzeichnet, daß**
- mindestens ein Stützelement (2, 3) ein mechanisches Stellungsanzeigemittel (222, 223, 226, 227) umfaßt, das in Abhängigkeit von der 1 optischen Einstellung des Gehäuses eingestellt werden kann,
- an der Seite (11, 12) des Gehäuses (1) eine 1 ortsfeste Aufnahme (112, 113) zur Einführung des am Stützelement (2, 3) montierten und in der Einstellposition blockierten Stellungsanzeigemittels (226, 227) ausgebildet ist.

2. Sicherheits-Lichtschranke nach Anspruch 1,
**dadurch gekennzeichnet, daß**
das Stützelement (2, 3) als Montagewinkel ausgebildet ist.

3. Sicherheits-Lichtschranke nach Anspruch 1,
**dadurch gekennzeichnet, daß**
das Stellungsanzeigemittel als konzentrisch zur Drehachse (ZZ) des Gehäuses (1) bezüglich des Stützelements (2, 3) angeordnetes, bogenförmiges Langloch (222, 223) ausgebildet ist und nach erfolgter optischer Einstellung eine Feststellverbindung mit Schraube und Mutter (226, 227) aufnimmt.

4. Sicherheits-Lichtschranke nach Anspruch 1,
**dadurch gekennzeichnet, daß** das Feststellmittel
- ein im Stützelement (2, 3) ausgebildetes konzentrisch zur Drehachse (ZZ) angeordnetes bogenförmiges Langloch (224, 225), und
- eine auf der entsprechenden Seite (11, 12) des Gehäuses (1) ausgebildete Gewindebohrung (114, 115) sowie eine durch das Langloch (224, 225) geführte und in die Gewindebohrung (114, 115) eingedrehte Schraube (228, 229) umfaßt.

5. Sicherheits-Lichtschranke nach Anspruch 1,
**dadurch gekennzeichnet, daß**
das mechanische Stellungsanzeigemittel (226, 227) und das Feststellmittel (228, 229) zum Blockieren der Drehverbindung zwischen dem Gehäuse (1) und den zugehörigen Stützelementen (2, 3) nur mit unterschiedlichen Werkzeugen betätigt werden können.

6. Sicherheits-Lichtschranke nach den Ansprüchen 3, 4, 5,
**dadurch gekennzeichnet, daß**
das Stellungsanzeigemittel einen Schlitzschraubenkopf (227) und das Feststellmittel einen Sechskantschraubenkopf (226, 229) umfassen.

7. Sicherheits-Lichtschranke nach Anspruch 1,
**dadurch gekennzeichnet, daß**
die Seite (11, 12) des Gehäuses (1) als Abdeckung und die Drehachse als in der Abdeckung (11, 12) ausgebildeter Zapfen (111) ausgebildet sind, wobei in dem diese Seite (11) des Gehäuses (1) aufnehmenden Stützelement (2, 3) eine Öffnung (221) ausgebildet ist, die als Lager für den Zapfen (111) dient, und die bogenförmigen Langlöcher (222, 223, 224, 225) konzentrisch zur Drehachse (ZZ) um die Öffnung herum angeordnet sind.

8. Sicherheits-Lichtschranke nach Anspruch 1,
**dadurch gekennzeichnet, daß**
- die Stellungsanzeigemittel in Form von zwei, konzentrisch zur Drehachse (ZZ) und diametral einander gegenüberliegend angeordneten, bogenförmigen Langlöchern (222, 223) sowie von zwei, in der Abdeckung (11, 12) ausgebildeten ortsfesten Aufnahmen (112, 113) ausgeführt sind, die sich in bezug zur Drehachse (ZZ) diametral einander gegenüberliegen, wobei die Feststellmittel im Stützelement (2, 3) und in der Abdeckung (11, 12) ebenfalls diametral einander gegenüberliegend sowie abwechselnd mit den mechanischen Stellungsanzeigemitteln angeordnet sind.

## Claims

1. An optical safety barrier, intended in particular for prevention of access to industrial installations, and composed of
- a unit (1) containing the electronic and optical transmitter and receiver components,
- this unit being mounted in a manner which can be adjusted optically by its two ends, about an axis (ZZ), in two supports (2,3), connected to a fixed part, such as a wall, structure, framework,
- the two ends of the unit (1) which correspond to the two supports are each connected by a pivoting link, e.g. a pivot or bearing, to the supports (2,3) in order to allow optical adjustment of the barrier.
- means for locking the pivoting link,
**characterised in that**:
- at least one support (2,3) includes mechanical indexing means (222,223,226,227), which is adjustable in accordance with the optical adjustment of the unit (1),
- the end (11,12) of the unit (1) is equipped with a fixed aperture (112,113) to receive the indexing means (226,227), held by the support (2,3) and locked at the adjusted position.

2. An optical safety barrier in accordance with claim 1, **characterised in that**:
- the support (2,3) is a bracket.

3. An optical safety barrier in accordance with claim 1, **characterised in that**:
- the indexing means is a curvilinear oblong aperture (222,223), centred on a pivoting axis (ZZ) of the unit
(1) in relation to the support (2,3), and accommodating a nut & bolt link (226,227) which is tightened up once optical adjustment has been effected.

4. An optical safety barrier in accordance with claim 1, **characterised in that** the locking means consists of:
- a curvilinear oblong aperture (224,225) provided in the support (2,3), and centred on the pivoting axis (ZZ) ,
- a thread (114,115) tapped into the end (12,13) of the unit (1), and a bolt (228,229), passing through the oblong aperture (224,225) to connect with the tapped thread (114,115).

5. An optical safety barrier in accordance with claim 1, **characterised in that**:
- the mechanical indexing means (226,227) and the means (228,229) for locking the pivoting link between the unit (1) and its supports (2,3) are adjustable only by means of tools which are different in nature.

6. An optical safety barrier in accordance with claims 3, 4, 5, **characterised in that**:
- the indexing means has a slot-head screw (227) and the locking device (228,229) has a hexagonally-headed screw.

7. An optical safety barrier in accordance with claim 1, **characterised in that**:
- the end (11,12) of the unit (1) is a cover, and the pivot is a stud (111) provided on the cover (11,12), and the support (2,3) accommodating this end (11,12) of the unit (1) has an aperture (221) forming a bearing for the stud (111), this aperture being surrounded by curvilinear oblong holes (222,223,224,225) which are centred on the pivoting axis (ZZ).

8. An optical safety barrier in accordance with claim 1, **characterised in that**:
- the indexing means are composed of two oblong curvilinear holes (222,223) which are centred on the pivoting axis (ZZ) and diametrically opposed to each other, and two fixed apertures (112,113) provided in the cover (11,12), in positions which are diametrically opposite to the pivoting axis (ZZ),
- the locking means are also diametrically opposite to each other in the support (2,3) and in the end (11,12), and located in between the mechanical indexing means.
